# FASCICULE DE BREVET EUROPEEN

(11) **EP 0 812 459 B1**
(45) Date de publication et mention de la délivrance du brevet: **15.03.2000**
(21) Numéro de dépôt: 96943194.9
(22) Date de dépôt: 24.12.1996
(51) Int. Cl.: G21C 17/06

(54) **DISPOSITIF ET PROCEDE DE CONTROLE DE CRAYONS DE GRAPPE DE COMMANDE POUR REACTEUR NUCLEAIRE**
VORRICHTUNG UND VERFAHREN ZUM ÜBERPRÜFEN VON KERNREAKTORSTEUERSTABBÜNDEL
DEVICE AND METHOD FOR TESTING COMMAND BUNDLE RODS FOR NUCLEAR REACTORS

(30) Priorité: 29.12.1995 FR 9515738
(43) Date de publication de la demande: 17.12.1997
(73) Titulaire: FRAMATOME, 92400 Courbevoie (FR); COMPAGNIE GENERALE DES MATIERES NUCLEAIRES, 78140 Velizy Villacoublay (FR)
(72) Inventeur: BOUR, Denis, F-69003 Lyon (FR); PIGELET, Jérôme, F-71100 Chalons-sur-Saône (FR)
(74) Mandataire: Fort, Jacques
(86) Numéro de dépôt international: FR9602078
(87) Numéro de publication internationale: WO9724730

(56) Documents cités:
- EP-A- 0 213 028
- EP-A- 0 410 580
- PATENT ABSTRACTS OF JAPAN vol. 002, no. 044 (M-013), 24 Mars 1978 & JP 53 000394 A (TOSHIBA CORP), 5 Janvier 1978,

## Description

La présente invention concerne le contrôle des crayons de grappes insérables dans le coeur d'un réacteur nucléaire et elle a plus particulièrement pour objet un dispositif et un procédé de contrôle par courants de Foucault et par ultra-sons, permettant de déterminer le degré d'usure des crayons.

L'invention trouve une application particulièrement importante dans le contrôle des crayons, constitués par une gaine contenant du matériau absorbant, appartenant aux grappes de réglage de réactivité insérables dans les assemblages de combustible des réacteurs refroidis et modérés à l'eau légère. Dans ces réacteurs, on utilise des grappes de réglage constituées chacune d'un faisceau de crayons absorbants, au nombre de vingt-quatre par exemple, portés par les bras d'une pièce supérieure de manipulation ou araignée.

Il est nécessaire de vérifier périodiquement l'état des crayons pour déterminer leur défauts, afin de déceler suffisamment tôt les risques de percement de la gaine ou de blocage par gonflement.

On a déjà proposé dans la demande EP-A-0 213 028, correspondant à FR-A-2585869, un procédé de contrôle des crayons suivant lequel on déplace longitudinalement l'un par rapport à l'autre les crayons et un ensemble d'examen. Dans une première étape, on descend la grappe à travers un ensemble de contrôle et on effectue un examen par courants de Foucault de plusieurs crayons à la fois. Au cours d'une seconde étape, on vérifie un à un les crayons douteux par sondage ultra-sonores, sur la longueur axiale jugée douteuse et suivant plusieurs profils. Un seul capteur ultra-sonore est prévu. Il peut être mis en rotation autour d'un crayon en même temps que l'on déplace longitudinalement ce dernier.

Ce procédé représente des avantages sur les solutions antérieurement connues. Il permet de n'effectuer un sondage ultra-sonore que sur les crayons reconnus douteux au cours de l'inspection par courants de Foucault, qui n'exige que des moyens beaucoup plus simples. En contrepartie, il ne fournit pas de renseignements complets sur le type de défaut subi par la gaine des crayons, à tous les niveaux longitudinaux. Or le nombre de défauts peut varier très largement d'une grappe à l'autre. Dans le cas des grappes de contrôle utilisées dans les réacteurs nucléaires à eau sous-pression actuels, l'usure peut, suivant le niveau, être en forme d'ogive, de lunule, de méplat, etc. Il peut y avoir également un gonflement de la gaine.

L'invention vise à fournir un procédé et un dispositif permettant de disposer de renseignements complets et cela sans influencer de façon notable la durée du contrôle.

Dans ce but, l'invention propose notamment un procédé de contrôle des crayons d'une grappe insérable dans le coeur d'un réacteur nucléaire, conforme à l'objet de la revendication 1.

L'analyse par courants de Foucault permet de déterminer globalement le degré d'usure externe des crayons. L'exploration ultra-sonore permet de plus de localiser les emplacements de manque de matière, ou de gonflement. L'analyse détaillée, qui constitue une opération complexe, peut n'être effectuée que sur des zones restreintes et en temps différé. Elle ne conduit donc pas à une immobilisation plus longue du dispositif de contrôle.

Dans un mode avantageux de réalisation, on mesure l'altitude du crayon au cours du déplacement de la grappe et on effectue une exploration ultra-sonore à balayage électronique à des niveaux successifs, chaque fois en une durée inférieure d'au moins un ordre de grandeur à l'intervalle de temps qui sépare deux mesures à des niveaux différents. Aussi on dispose de résultats correspondant chacun pratiquement à un même niveau.

L'analyse peut fournir une courbe représentative de la périphérie des zones douteuses ; elle peut comporter le calcul et l'affichage (ou l'enregistrement) de l'usure suivant un profil longitudinal ou transversal. L'analyse peut également comporter le calcul de l'épaisseur de matière perdue par suite de l'usure, suivant un profil longitudinal ou transversal déterminé.

Chaque exploration peut s'effectuer en une durée très brève, grâce au balayage électronique, beaucoup plus rapide qu'un balayage mécanique, donc à un niveau sensiblement constant.

L'exploration ultra-sonore s'effectuera en règle générale en excitant simultanément plusieurs transducteurs de la sonde avec une focalisation électronique réalisée de façon classique en appliquant des retards sur les impulsions d'excitation des transducteurs les plus proches du point de focalisation choisi. Cette focalisation électronique complète celle qui est obtenue de façon naturelle du fait de la disposition annulaire des transducteurs autour du crayon. Une focalisation dans le sens longitudinal peut être assurée à l'aide d'un miroir torique, ou d'une lentille ou encore des transducteurs élémentaires courbes. Elle peut également être effectuée par voie électronique, en plaçant plusieurs couronnes de transducteurs échelonnées dans le sens longitudinal.

L'invention propose également un dispositif de contrôle des crayons d'une grappe insérables dans le coeur d'un réacteur nucléaire, ce dispositif comprenant un corps muni de moyens de guidage coulissant des crayons dans m orientations différentes de la grappe (m étant un sous-multiple entier du nombre n des crayons de la grappe) et un panier de mesure portant n/m bobines de contrôle par courants de Foucault et n/m sondes à ultra-sons placées sur des trajets de guidage différents, caractérisé en ce que chaque sonde à ultra-sons est constituée par un support annulaire entourant un trajet de crayon et portant une couronne de transducteurs élémentaires et en ce que les transducteurs sont reliés à un circuit d'excitation séquentielle des transducteurs par groupes successifs provoquant un balayage circonférentiel autour du trajet du crayon et une focalisation électronique vers la surface d'un tube en circulation suivant le trajet.

Dans un mode avantageux de réalisation de l'invention, les transducteurs sont placés de façon à émettre dans une direction qui n'est pas radiale par rapport au trajet du tube (et qui est avantageusement parallèle à ce trajet) et un miroir est interposé entre les transducteurs et le tube pour réfléchir les ultra-sons vers le tube et éventuellement les focaliser au niveau de la périphérie nominale du tube.

Le circuit d'excitation séquentielle peut être prévu de façon à permettre d'orienter à volonté le faisceau, soit dans une direction d'examen d'un crayon, soit en direction d'un rétro-réflecteur permettant de déterminer la vitesse des ultra-sons dans le milieu qui sépare les transducteurs du crayon, par mesure de temps d'aller-retour des ultra-sons.

Les caractéristiques ci-dessus ainsi que d'autres apparaîtront mieux à la lecture de la description qui suit d'un mode particulier de réalisation, donné à titre d'exemple non limitatif.

La description se réfère aux dessins qui l'accompagnent dans lesquels :
- la figure 1 est un schéma de principe, en perspective, montrant une répartition possible de bobines de contrôle par courants de Foucault et de sondes ultra-sonores dans un dispositif de contrôle ;
- la figure 2 est une vue de dessus montrant n/m = 6 bobines à courants de Foucault et n/m = 6 sondes ultra-sonores réparties dans un panier de mesure qui porte également un capteur d'altitude ;
- la figure 3 est une vue en coupe longitudinale montrant une des constitutions possibles de sonde ultra-sonore;
- la figure 4 est un schéma de détail montrant un mode "optique" de focalisation, en coupe suivant un plan passant par l'axe du trajet de circulation d'un crayon ;
- les figures 5 et 6 sont des schémas montrant respectivement la focalisation électronique sur un crayon et sur un miroir destiné à permettre la mesure de la vitesse des ultra-sons ;
- la figure 7 est une vue en perspective d'un capteur d'altitude utilisable ;
- la figure 8 montre un type d'usure en "double v" d'un crayon ;
- la figure 9 est une courbe représentative du signal obtenu au cours d'une exploration circonférentielle au niveau indiqué par la figure 8 ;
- la figure 10 montre un enregistrement d'usure suivant un profil longitudinal que permet de fournir un dispositif suivant l'invention ;
- la figure 11 est un schéma d'ensemble montrant une disposition possible des constituants d'un dispositif de contrôle d'une grappe placée en piscine.

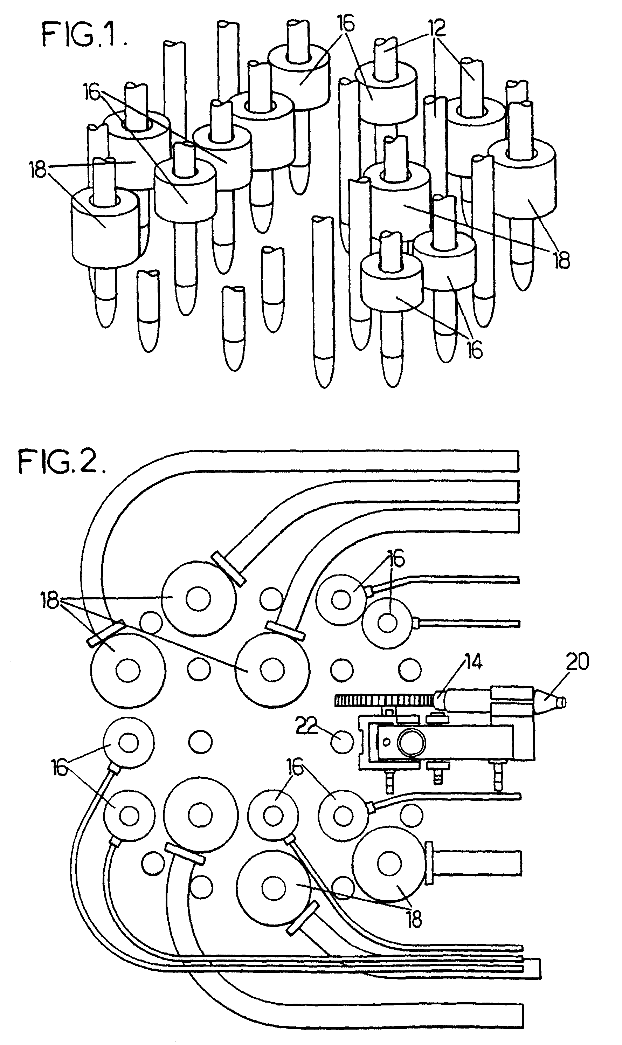

L'architecture d'ensemble du dispositif de contrôle peut être similaire à celle du dispositif décrit dans le document EP-A-0 213 028 ou FR-A-2585869 auquel on pourra se reporter. Ce dispositf est destiné à l'examen de grappes de commande comprenant vingt-quatre crayons absorbants 12 (figure 1) terminés chacun par une ogive facilitant son insertion dans un tube guide d'assemblage. Le dispositif de contrôle est généralement placé dans le bâtiment du combustible accolé à l'enceinte d'un réacteur nucléaire.

La partie mécanique du dispositif peut être similaire à celle décrite ans le document EP-A-0 213 028 ou FR-A-2 585 869. Elle comporte un corps constituant une protection, muni de tubes de guidage des crayons de la grappe et une platine ou panier horizontal portant les détecteurs du dispositif. Cette partie mécanique est placée dans une piscine.

Le panier peut être constitué par une platine 14 (figure 2) sur laquelle sont fixées six têtes 16 d'examen par courants de Foucault et six sondes 18 d'exploration ultra-sonore. La figure 2 montre une répartition possible des têtes et des sondes. La platine 14 porte également un capteur 20 d'altitude des crayons 12. Pour que le capteur puisse être sensiblement au même niveau que les sondes, et les têtes, il mesure l'altitude d'un crayon qui n'est pas soumis à examen et qui est guidé par l'un des trous 22 de passage des crayons dans la platine.

Les têtes d'examen par courants de Foucault peuvent être de type classique, comportant une bobine encerclante alimentée à haute fréquence. Cependant, il est plus avantageux de leur donner la constitution décrite dans la demande de brevet FR déposée le même jour 29.12.95 que la présente demande pour "Dispositif et procédé de contrôle de tubes par courants de Foucault" et correspondant aux demandes publiées WO-A-97 24611 ou EP-A-0 812 419. Dans ce cas, on soumet également l'emplacement du tube à analyser, à l'intérieur de la tête, à un champ magnétique continu de saturation de la couche superficielle du tube.

Le nombre de six têtes n'est pas limitatif et il serait par exemple possible de prévoir douze têtes et douze sondes, dans le cas d'une grappe à vingt-quatre crayons ayant une symétrie d'ordre quatre ou deux.

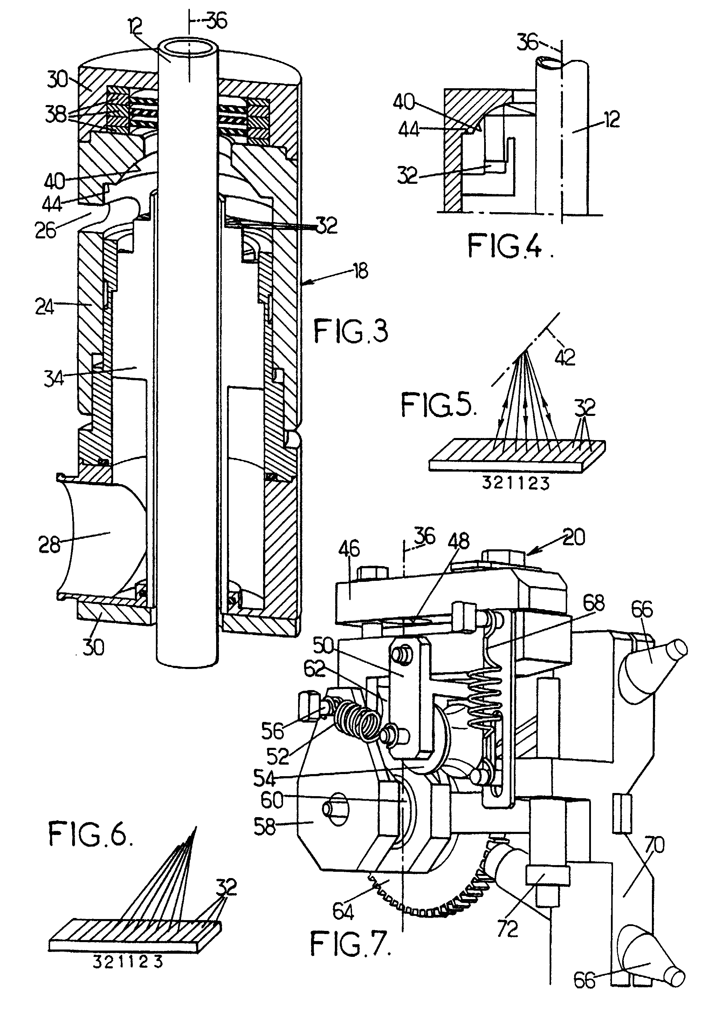

Chaque sonde à ultra-sons peut avoir la constitution montrée en figure 3. Elle a alors un boîtier en plusieurs pièces assemblées et une couronne de transducteurs piézo-électriques élémentaires. Le boîtier peut être regardé comme ayant un corps tubulaire 24 dans lequel sont ménagés des trous 26 de circulation d'eau, un embout 28 de sortie de câbles coaxiaux d'alimentation des transducteurs et aux extrémités du corps, des plaques de guidage 30 destinées à centrer le tube à examiner dans la couronne de transducteurs.

Dans la plaque de guidage supérieure 30 sont montées des brosses de centrage empilées 38, ayant par exemple chacune une rondelle en matière plastique flexible dont la périphérie externe est encastrée dans un bloc de plus grande épaisseur.

La couronne de transducteurs est constituée d'un réseau de transducteurs élémentaires 32 (éléments piézo-électriques, en général) montés sur un support tubulaire 34 et reliés chacun à un conducteur non représenté. Dans le mode de réalisation illustré, les transducteurs 32 sont disposés de façon à émettre un faisceau ultra-sonore dans une direction parallèle à l'axe 36 du trajet de circulation du tube à examiner.

Un miroir annulaire 40 est ménagé sur la face interne du corps 24, à la partie supérieure de celui-ci, pour renvoyer le faisceau ultra-sonore émis par les transducteurs vers le tube 12 et retourner les échos vers les transducteurs.

Dans le cas schématisé en figure 4, le miroir 40 est de forme torique concave : son rayon de courbure et son orientation sont prévus de façon qu'un faisceau émis par un transducteur soit focalisé, dans le sens axial, au niveau de la surface externe nominale d'un crayon à examiner.

Les transducteurs sont reliés, par des câbles coaxiaux, à un circuit externe prévu pour réaliser un balayage et une focalisation électronique. La focalisation électronique est obtenue en excitant un groupe de transducteurs (par exemple six dans le cas de la figure 5) avec des retards sélectionnés de façon à correspondre aux différences de temps de vol entre les transducteurs et la ligne 42 sur laquelle la focalisation doit être réalisée (figure 5). A chaque tir d'exploration, le groupe de six transducteurs est décalé, de façon à balayer une zone qui serait droite dans le cas montré en figure 5 (où les transducteurs sont dans un même plan) mais qui est courbe dans le cas de la sonde de la figure 3. Les retards sont choisis de façon à provoquer une focalisation électronique au niveau de la surface externe nominale du crayon 12.

Dans le cas représenté en figure 4, un réflecteur auxiliaire 44 est ménagé sur le corps, à un emplacement tel qu'un faisceau ultra-sonore émis vers le réflecteur par un groupe de transducteurs 32 revient sur des transducteurs de la sonde. Dans le cas illustré sur la figure 4, ce réflecteur auxiliaire 44 est constitué par une surface plate orthogonale à l'axe 36. Par modification des retards d'excitation des transducteurs d'un même groupe, il est possible de provoquer une émission non plus vers le tube à examiner par l'intermédiaire du miroir 40, mais vers le réflecteur auxiliaire 44, comme cela est montré sur la figure 6.

A la réception, des retards du même type que ceux utilisés à l'émission sont appliqués aux échos, de façon à reconstituer un écho unique.

La distance d'aller-retour des ultra-sons réfléchis sur le réflecteur auxiliaire 44 et la mesure du temps d'aller-retour permet de calculer la vitesse des ultra-sons dans l'eau et, en conséquence, d'étalonner le dispositif et de déduire le diamètre de la périphérie externe du tube 12 et donc l'épaisseur du tube à partir du temps de vol.

La focalisation optique montrée en figure 4 peut être remplacée par une focalisation d'autre nature, par exemple en utilisant l'une des constitutions décrites dans la demande de brevet WO-A-97 09 614 correspondant à la demande EP-A-0 848 815 ou FR-A-2 738 636. Il est également possible d'utiliser une lentille annulaire de focalisation dans le sens axial ou des transducteurs focalisants.

Le capteur d'altitude 20 peut avoir la constitution montrée en figure 7. Il comporte alors un bâti en plusieurs pièces assemblées. L'une de ces pièces constitue une bride 46 de fixation sur la platine par serrage. Elle est percée d'un trou 48 de passage d'un crayon. Le bâti porte un balancier 50 en forme de H, pouvant tourner autour d'un axe orthogonal à l'axe 36 de circulation du crayon. Un ressort, par exemple hélicoïdal, 52 est tendu entre l'axe d'un galet presseur 54 qui tourne sur le balancier 50 et une tige 56 d'articulation d'un bras de mesure 58. Sur ce bras de mesure tourne un galet de mesure 60 que le ressort 52 maintient appliqué contre le crayon circulant suivant le trajet d'axe 36. Un galet de guidage supplémentaire 62 peut être prévu et tourner fou sur la tige 56.

Les moyens de mesure de la rotation du galet de mesure 60 et donc des déplacements du crayon comprennent une roue dentée de comptage 64 et deux détecteurs de proximité 66 destinés à fournir une impulsion chaque fois qu'une dent passe devant eux. Un ressort de traction 68 entre le bâti et un bloc 70 qui porte les détecteurs de proximité tire le bloc vers le haut. La position du bloc 70 peut être fixée par une butée réglable 72 permettant d'ajuster la position de départ de la mesure de déplacement du crayon.

Les différents éléments constitutifs du dispositif peuvent être répartis comme indiqué schématiquement sur la figure 11. Les équipements immergés du dispositif comprennent un stand 74 auquel appartient le panier de mesure. Ce dernier est relié aux baies de commande et d'exploitation placé en surface par un faisceau de câbles d'acquisition par courants de Foucault 76, un faisceau de câbles d'acquisition par ultra-sons 78 et un câble 80 de liaison avec le capteur d'altitude. Un multiplexeur 82 est interposé sur le faisceau de câbles d'acquisition ultra-sonore. La baie 84 de mesure par courants de Foucault peut avoir une constitution classique, si ce n'est qu'elle peut travailler à plusieurs fréquences différentes en cas de mise en oeuvre du procédé décrit dans la demande de brevet français déjà mentionnée. La baie 86 de mesure par ultra-sons peut être prévue pour réaliser une séquence de mesure du genre qui sera décrit ci-après. Enfin, la baie informatique 88 commande les baies de mesure et exploite les résultats.

La séquence de mesure pour caractériser les crayons d'une grappe peut être la suivante.

Au cours d'une première étape, les chaînes d'acquisition par courants de Foucault et par ultra-sons sont paramétrées ou étalonnées. Par exemple, la vitesse du son dans l'eau de la piscine peut être déterminée par mesure du temps d'aller-retour avec l'orientation de faisceau montrée en figure 6.

Une séquence de mesure est ensuite effectuée. Il ne sera question, pour simplifier, que de l'acquisition par ultra-sons.

L'acquisition s'effectue sur trois ou six crayons simultanément, en effectuant un balayage circonférentiel à chaque émission d'un top de codage, généré par la baie informatique 88 à l'issue de chaque pas de déplacement déterminé de la grappe, mesuré par le capteur d'altitude. Les valeurs à chaque niveau sont enregistrées. La baie informatique permet de tracer les courbes donnant l'état des crayons à différents niveaux ainsi que d'autres informations jugées nécessaires. Enfin, la grappe est extraite du stand 74 et tournée de 90° pour reprendre la séquence.

Le logiciel chargé dans la baie informatique 88 peut notamment permettre de :
- sélectionner un profil longitudinal sur un crayon,
- centrer le profil sur l'axe nominal des déplacements,
- déterminer les profondeurs et positions des défauts de surface,
- enregistrer un fichier de résultats.

Les résultats bruts fournis par sondage ultra-sonore représentent les temps de vol. Les rayons des crayons sont restitués par traitement de ces temps par le logiciel, qui peut être prévu pour calculer le pourcentage de matière manquante sur toute la hauteur.

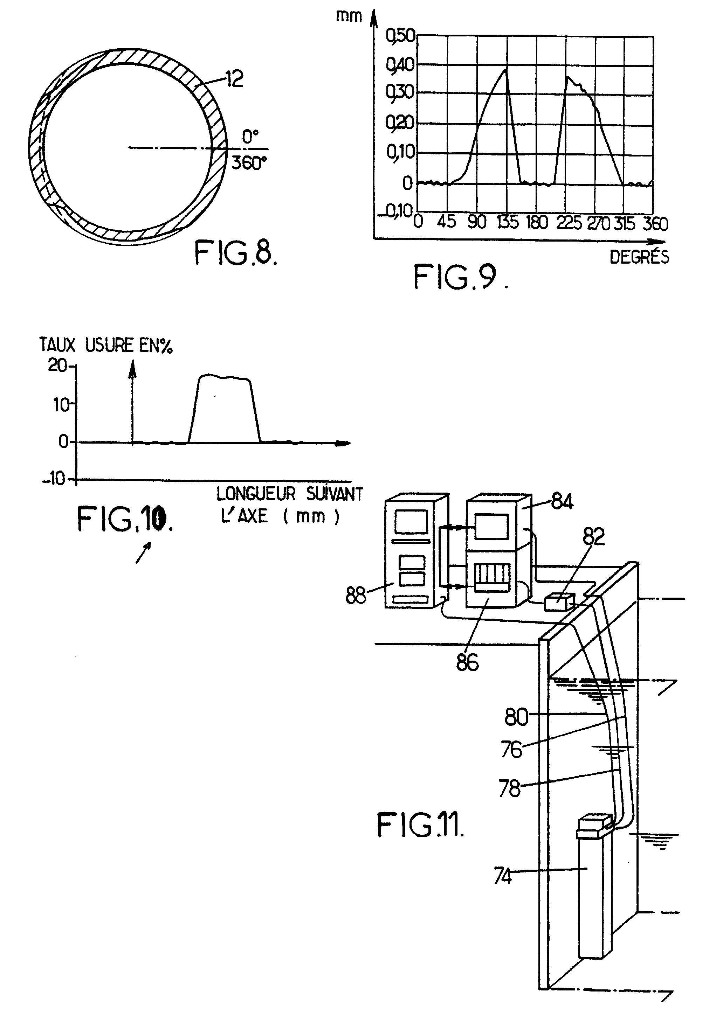

A titre d'exemple, la figure 8 montre, en traits pleins, un type d'usure qu'on peut qualifier de "en double V", provoquée par le frottement sur les lèvres d'une fente longitudinale d'un tube de gainage.

Les baies de mesure peuvent alors restituer une courbe indiquant les écarts par rapport au rayon nominal, sur toute la périphérie, comme l'indique la figure 9.

A partir de la mesure effectuée à plusieurs niveaux successifs, il est possible de reconstituer, suivant un profil longitudinal donné, la variation des taux d'usure, comme indiqué sur la figure 10.

L'invention permet ainsi de déterminer les types d'usure subis, qui peuvent être très variés. On peut par exemple constater des usures en lunule, du genre indiqué en tirets sur la figure 8, provoquées à certains niveaux par une suite de vibrations conduisant à des frottements sur les cartes de guidage.

L'invention est susceptible de nombreuses variantes de réalisation, notamment en ce qui concerne la constitution des sondes. En particulier l'utilisation d'un miroir, bien qu'avantageuse car elle réduit l'encombrement en plan, n'est pas indispensable et la focalisation peut être réalisée par d'autres moyens.

## Revendications

1. Procédé de contrôle des crayons d'une grappe insérable dans le coeur d'un réacteur nucléaire, suivant lequel les crayons et un ensemble de contrôle fournissant un signal de mesure sont déplacés longitudinalement l'un par rapport à l'autre et suivant lequel:
(a) la grappe, comportant un nombre n de crayons, est déplacée à travers un ensemble de contrôle à l'aide duquel est effectué un examen par courants de Foucault sur n/m crayons à la fois, où m est un sous-multiple entier de n, et on enregistre simultanément les échos obtenus par exploration ultra-sonore à balayage électronique de toute la périphérie de n/m crayons à la fois sont enregistrés à des niveaux longitudinaux successifs,
(b) cette opération est répétée m fois après avoir chaque fois fait tourner la grappe d'un angle de 360°/m, et
(c) les enregistrements des résultats d'écho ultrasonore sous-analysés sur les longueurs axiales de crayons dont l'examen par courants de Foucault indique qu'elles sont douteuses et (d) on en déduit le type d'usure.

2. Procédé selon la revendication 1, caractérisé en ce que l'analyse s'effectue en traçant la courbe représentative de la périphérie des crayons.

3. Procédé selon la revendication 1, caractérisé en ce que l'analyse comporte le calcul et l'affichage ou l'enregistrement de l'usure suivant tout ou partie de la hauteur d'un crayon, suivant un profil longitudinal seulement d'un crayon ou suivant des sections transversales successives d'altitude donnée.

4. Procédé selon la revendication 1, 2 ou 3, caractérisé en ce que l'analyse comporte le calcul du manque de matière sur une longueur déterminée du crayon et suivant un profil longitudinal déterminé de ce dernier.

5. Procédé selon la revendication 1, 2 ou 3, caractérisé en ce que l'altitude du crayon au cours du déplacement de la grappe et en ce qu'une exploration ultra-sonore à balayage électronique est effectuée à des niveaux successifs, chaque fois en une durée inférieure d'au moins un ordre de grandeur à l'intervalle de temps qui sépare deux mesures à des niveaux différents.

6. Procédé selon la revendication 1, 2 ou 3 caractérisé en ce que l'exploration ultra-sonore est effectuée en excitant successivement des groupes de transducteurs, avec des retards entre excitations des transducteurs du groupe tels qu'il y ait focalisation par voie électronique dans le sens circonférentiel autour de l'axe du trajet de circulation du crayon.

7. Procédé selon la revendication 1, 2 ou 3, caractérisé en ce que l'examen par courants de Foucault est effectué en soumettant à la fois le tube à l'action d'une bobine encerclante alimentée à haute fréquence et à un champ magnétique continu suffisant pour saturer magnétiquement une couche mince superficielle.

8. Dispositif de contrôle des crayons d'une grappe insérable dans le coeur d'un réacteur nucléaire, comprenant un corps muni de moyens de guidage coulissant des crayons dans m orientations différentes de la grappe, m étant un sous-multiple du nombre n des crayons de la grappe, caractérisé en ce qu'il comprend un panier de mesure portant n/m têtes (16) d'examen par courants de Foucault et n/m sondes d'exploration ultra-sonore (18), les têtes et les sondes étant placées sur des trajets de guidage différents, en ce que chaque sonde à ultra-sons est constituée par un support annulaire entourant un trajet de crayons et portant une couronne de transducteurs élémentaires (32) et en ce que les transducteurs sont reliés à un circuit d'excitation séquentielle des transducteurs par groupes successifs provoquant un balayage circonférentiel du tube et de focalisation électronique vers la surface d'un tube en circulation sur le trajet.

9. Dispositif selon la revendication 8, caractérisé en ce que ledit circuit est prévu pour enregistrer les échos reçus par les transducteurs excités et pour effectuer un focalisation à la réception par application de retards égaux aux retards appliqués à l'émission.

10. Dispositif selon la revendication 8 ou 9, caractérisé par un miroir annulaire (40) de réflexion des ultra-sons, interposé entre la couronne de transducteurs (32) et le trajet du tube et coaxial à ce trajet.

11. Dispositif selon la revendication 8 ou 9, caractérisé en ce que ledit miroir annulaire (40) a une section droite et un emplacement tels qu'il focalise les ultra-sons émis par les transducteurs (32) au niveau de la périphérie externe d'un tube (12) de diamètre nominal.

12. Dispositif selon la revendication 8 ou 9, caractérisé en ce qu'il comporte également un réflecteur (44) de renvoi des ultra-sons vers les transducteurs et en ce que le circuit d'excitation séquentielle et de focalisation est prévu pour diriger à volonté un faisceau d'ultra-sons à partir des transducteurs vers le réflecteur.

13. Dispositif selon la revendication 8 ou 9, caractérisé en ce que lesdits circuits appartiennent à des baies de mesure et d'informatique programmées de façon à provoquer une séquence d'acquisition de mesure sur n/m crayons simultanément par synchronisation avec des tops codeurs générés par le déplacement vertical de la grappe, d'enregistrement des valeurs mesurées, de tracé de courbes donnant l'état des crayons, et de répétition de la séquence après extraction de la grappe et rotation, au cours d'un nouveau déplacement.

## Patentansprüche

1. Verfahren zum Überprüfen von Brennstäben eines in den Kern eines Kernreaktors einsetzbaren Bündels, gemäß dem die Stäbe und eine Überprüfanordung, die ein Meßsignal liefert, längs zueinander bewegt werden und gemäß dem:
(a) das Bündel, das eine Anzahl n von Brennstäben aufweist, durch eine Überprüfanordnung bewegt wird, mit Hilfe derer eine Untersuchung mittels Wirbelströmen auf n/m Brennstäben gleichzeitig durchgeführt wird, wobei m ein ganzzahliges Untervielfaches von n ist, und gleichzeitig die Echos registriert werden, die durch Ultraschallabtatstung mittels elektronischem Abtasten bzw. Überstreichen des gesamten Umfangs von n/m Brennstäben gleichzeitig auf aufeinanderfolgenden Längsniveaus erhalten werden,
(b) dieser Vorgang m mal wiederholt wird, nachdem jedesmal das Bündel um einen Winkel von 360°/m gedreht wurde, und
(c) die Registrierungen bzw. Aufnahmen der Resultate der Ultraschallechos über die axialen Längen der Brennstäbe analysiert werden, deren Untersuchung durch Wirbelströme angibt, daß sie zweifelhaft sind, und
(d) man daraus die Art der Abnutzung ableitet.

2. Verfahren nach Anspruch 1, dadurch gekennzeichnet, daß die Analyse durchgeführt wird unter Aufzeichnen der Kurve, die den Umfang der Brennstäbe darstellt.

3. Verfahren nach Anspruch 1, dadurch gekennzeichnet, daß die Analyse die Berechnung und das Anzeigen oder Aufnehmen der Abnutzung entlang der gesamten oder der Teilhöhe eines Brennstabes umfaßt, entlang eines Längsprofils von nur einem Brennstab oder entlang von vorgegebenen aufeinanderfolgenden Höhenquerschnitten.

4. Verfahren nach Anspruch 1, 2 oder 3, dadurch gekennzeichnet, daß die Analyse die Berechnung des Fehlens von Material über eine vorbestimmte Länge des Brennstabes und entlang einem vorbestimmten Längsprofil des letzteren aufweist.

5. Verfahren nach Anspruch 1, 2 oder 3, dadurch gekennzeichnet, daß die Höhe der Brennstäbe während der Bewegung des Bündels ständig gemessen wird und das eine Ultraschallüberprüfung mit elektronischer Abtastung durchgeführt wird bei aufeinanderfolgenden Niveaus, jedesmal mit einer Dauer, die um wenigstens eine Größenordnung zum Zeitintervall geringer ist, das zwei Messungen auf unterschiedlichen Niveaus trennt.

6. Verfahren nach Anspruch 1, 2 oder 3, dadurch gekennzeichnet, daß die Ultraschallabtastung durchgeführt wird, unter aufeinanderfolgendem Anregen von Messumwandlergruppen, mit Verzögerungen zwischen den Anregungen der Meßumwandler der Gruppe derart, daß eine Focussierung durch elektronischem Weg in die Umfangsrichtung um die Achse der Zirkulationsbahn des Brennstabs erfolgt.

7. Verfahren nach Anspruch 1, 2 oder 3, dadurch gekennzeichnet, daß die Untersuchung mittels Wirbelströmen durchgeführt wird unter gleichzeitigem Unterwerfern des Rohres der Einwirkung einer einkreisenden Spule, die mit hoher Frequenz gespeist wird, und einem kontinuierlichem Magnetfeld, das ausreicht, magnetisch eine dünne Oberflächenschicht zu sättigen.

8. Vorrichtung zum Überprüfen von Brennstäben eines Bündels, das in den Kern eines Kernreaktors einsetzbar ist, mit einem Körper, der mit Gleitbewegungs-Führungseinrichtungen der Brennstäbe in m unterschiedliche Richtungen des Bündels versehen ist, wobei m ein Untervielfaches der Anzahl n der Brennstäbe des Bündels ist, dadurch gekennzeichnet, daß sie eines Meßkopf aufweist, der n/m Wirbelstromprüfköpfe (16) und n/m Ultraschallabtastsonden (18) trägt, wobei die Köpfe und die Sonden auf unterschiedlichen Führungsbahnen gesetzt sind, daß jede Ultraschallsonde durch eine ringförmige Stütze gebildet wird, die eine Brennstabbahn umgibt und einen Kranz von elementaren Meßwandlern (32) trägt, und daß die Meßwandler mit einem sequentiellen Anregekreis der Meßwandler durch aufeinanderfolgende Gruppen verbunden ist, die eine Umfangsabtastung des Rohres und eine elektronische Focussierung auf die Oberfläche eines sich auf der Bahn bewegenden oder drehenden Rohres hervorruft.

9. Vorrichtung nach Anspruch 8, dadurch gekennzeichnet, daß der Schaltkreis vorgesehen ist, um die Echos zu speichern, die von den angeregten Meßwandlern erhalten werden, und um eine Focussierung bei der Aufnahme durch Aufbringen von gleichen Verzögerungen auf die bei der Emission aufgebrachten Verzögerungen auszuführen.

10. Vorrichtung nach Anspruch 8 oder 9, gekennzeichnet durch einen ringförmigen Ultraschall-Reflexionsspiegel (40), der zwischen den Meßumwandlerkranz (32) und der Bahn des Rohres und koaxial zu dieser Bahn gesetzt ist.

11. Vorrichtung nach Anspruch 8 oder 9, dadurch gekennzeichnet, daß der ringförmige Spiegel (40) einen geraden Querschnitt und eine Anordnung derart hat, daß er die Ultraschallwellen die von den Meßwandlern (32) emitiert werden auf der Höhe des äußeren Umfangs eines Rohres (12) von nominalem Durchmesser focussiert.

12. Vorrichtung nach Anspruch 8 oder 9, dadurch gekennzeichnet, daß sie ebenfalls einen Reflektor (44) zum Zurückschicken der Ultraschallwellen zu den Meßwandlern aufweist , und daß der sequentielle und Focussierungsanregekreis vorgesehen ist, um willkürlich ein Ultraschallbündel ausgehend von den Meßwandlern zu dem Reflektor, zu leiten

13. Vorrichtung nach Anspruch 8 oder 9, dadurch gekennzeichnet, daß die Schaltkreise zu programmierten Programm- und Meßzellen derart gehören, daß sie eine Meßaufnahmesequenz auf n/m Brennstäben gleichzeitig hervorrufen durch Synchronisation mit Topkodierern, die durch die vertikale Bewegung des Bündels, der Aufnahme der gemessenen Werte, der Kurvenbahnen, die den Zustand der Brennstäbe ergeben und der Wiederholung der Sequenz nach Herausziehen des Bündels und Drehen während einer neuen Bewegung erzeugt werden.

## Claims

1. A method of inspecting the rods of a cluster insertable in the core of a nuclear reactor, in which the rods and an inspection assembly that provides a measurement signal are displaced longitudinally relative to each other, comprising:
a) displacing the cluster, comprising n rods, is displaced through an inspection assembly, whereby eddy current inspections are performed on n/m rods simultaneously, where m is an integer submultiple of n, and simultaneously the echoes obtained by electronically scanned ultrasound probing over the entire periphery of n/m rods simultaneously are recorded at successive longitudinal levels;
b) performing step (a) m times, each time after rotating the cluster through an angle of 360°C/m; and
c) analyzing the recordings of the ultrasound echo results at least over those axial lengths of the rods found to be doubtful by the eddy current inspection, and
d) deriving the type of wear therefrom.

2. A method according to claim 1, characterized in that the analysis is performed by drawing the curve respresenting the periphery of the rods.

3. A method according to claim 1 or 2, characterized in that the analysis includes computing and displaying or recording wear along all or a portion of the height of a rod on a single longitudinal profile of a rod or on successive cross-sections at given respective elevations.

4. A method according to claim 1, 2 or 3, characterized in that the analysis includes computing the amount of material that is missing over a determined length of the rod along a determined longitudinal profile thereof.

5. A method according to any preceding claim, characterized in that rod elevation is continuously measured during cluster displacement and in that electronically scanned ultrasound probing is performed at successive levels, on each occasion in a period of time that is at least an order of magnitude smaller than the time interval between two measurements at different levels.

6. A method according to claim 1, 2 or 3, characterized in that ultrasound scanning is performed by sucessively exciting groups of transducers with delays between excitations of the transducers within the group such that electronic focusing is achieved in the circumferential direction around the axis of the travel path of the rod.

7. A method according to claim 1, 2 or 3, characterized in that eddy current examination is performed by subjecting the tubes simultaneously to the action of a surrounding coil that is fed at high frequency and to a continuous magnetic field of sufficient strength to saturate magnetically a thin surface layer.

8. Apparatus for inspecting the rods of a cluster insertable into the core of a nuclear reactor, the apparatus comprising a body provided with means for slidably guiding the rods in m different orientations of the cluster, where m is a submultiple of a number n of rods in the cluster, the apparatus being characterized in that it includes a measurement jig carrying n/m heads (16) for eddy current examination and n/m probes (18) for ultrasound scanning, the heads and the probes being placed on different guide paths, in that each ultrasound probe is constituted by an annular support surrounding a rod path and carrying a ring of individual transducers (32), and in that the transducers are connected to a circuit for sequentially exciting the transducers in successive groups, causing the tube to be scanned circumferentially, and for performing electronic focusing towards the surface of a tube travelling along the path.

9. Apparatus according to claim 8, characterized in that said circuit is designed to record the echoes received by the excited transducers and to perform focusing on reception by applying delays equal to the delays applied on emission.

10. Apparatus according to claim 8 or 9, characterized by an annular ultrasound-reflecting mirror (40) interposed between the ring of transducers (32) and the path of the tube, and coaxial with said path.

11. Apparatus according to claim 8 or 9, characterized in that said annular mirror (40) has a right cross-section and a location such that it focuses the ultrasound emitted by the transducers (32) on the outer periphery of a tube (12) of nominal diameter.

12. Apparatus according to claim 8 or 9, characterized in that it also includes a reflector (44) for reflecting ultrasound towards the transducers, and in that the circuit for sequential excitation and focusing is designed to direct an ultrasound beam at will from the transducers towards the reflector.

13. Apparatus according to claim 8 or 9, characterized in that said circuits belong to measurement and computer racks programmed to cause a measurement acquisition sequence to be performed on n/m rods simultaneously by synchronization with code pulses generated by the vertical displacement of the cluster, for recording the measured values, for plotting curves showing the state of the rods, and for repeating the sequence during a further displacement after the cluster has been extracted and rotated.
